(19) Europäisches Patentamt
European Patent Office
Office européen des brevets

(11) Veröffentlichungsnummer : **0 337 418 B1**

(12) **EUROPÄISCHE PATENTSCHRIFT**

(45) Veröffentlichungstag der Patentschrift :
03.07.91 Patentblatt 91/27

(51) Int. Cl.⁵ : **F16H 25/12**

(21) Anmeldenummer : **89106480.0**

(22) Anmeldetag : **12.04.89**

(54) **Vorrichtung zur Umwandlung einer Drehbewegung in eine hin- und hergehende, lineare Hubbewegung bzw. umgekehrt.**

(30) Priorität : 13.04.88 DE 3812231
07.02.89 DE 3903546

(43) Veröffentlichungstag der Anmeldung :
18.10.89 Patentblatt 89/42

(45) Bekanntmachung des Hinweises auf die
Patenterteilung :
03.07.91 Patentblatt 91/27

(84) Benannte Vertragsstaaten :
AT BE CH DE ES FR GB GR IT LI LU NL SE

(56) Entgegenhaltungen :
DE-A- 3 408 067

(56) Entgegenhaltungen :
DE-B- 1 083 833
DE-C- 687 918
DE-C- 941 242
US-A- 2 246 733

(73) Patentinhaber : **Miller, Franz-Georg**
**August-Lämmle-Weg 10**
**W-7250 Leonberg (DE)**

(72) Erfinder : **Miller, Franz-Georg**
**August-Lämmle-Weg 10**
**W-7250 Leonberg (DE)**

(74) Vertreter : **Freiherr von Schorlemer, Reinfried,**
**Dipl.-Phys.**
**Patentanwalt Brüder-Grimm-Platz 4**
**W-3500 Kassel (DE)**

EP 0 337 418 B1

## Beschreibung

Die Erfindung betrifft eine Vorrichtung der im Oberbegriff des Anspruchs 1 angegebenen Gattung.

Bekannte Vorrichtungen dieser Art (US-A-2 246 733) können einerseits zur Steuerung von Ventilen, Robotern, Werkzeugmaschinen od. dgl., andererseits zwecks Vermeidung von Kurbelgetrieben in Verbindung mit Pumpen, Verbrennungsmotoren od. dgl. angewendet werden. Bei ihnen besteht jede Kraftübertragungseinrichtung aus einzelnen Mitnehmerkugeln, die teilweise in der Lagerbohrung angeordnet und teilweise in den ersten und zweiten Führungsnuten abgestützt sind. Daher müssen entweder die die Lagerbohrungen aufweisenden Wandabschnitte vergleichsweise dünn oder die Durchmesser der Mitnehmerkugeln vergleichsweise groß ausgebildet sein, damit die Mitnehmerkugeln ausreichend tief in die ersten und zweiten Führungsnuten ragen können, wodurch sich ungünstige mechanisch/konstruktive Verhältnisse ergeben. Vor allem ist eine derartige Vorrichtung aber aufgrund der Tatsache, daß die Mitnehmerkugeln mit beiden Führungsnuten durch Gleittreibung wechselwirken, nur beschränkt anwendbar und durch große Reibungskräfte und daher auch einen großen Verschleiß gekennzeichnet.

Der Erfindung liegt die Aufgabe zugrunde, die eingangs bezeichnete Vorrichtung dadurch zu verbessern, daß sich günstigere mechanisch/konstruktive Verhältnisse herstellen lassen und beim Betrieb eine erhebliche Verminderung der Reibungskräfte und damit des Verschleißes erzielt wird.

Zur Lösung dieser Aufgabe dienen die kennzeichnenden Merkmale des Anspruchs 1.

Die Erfindung bringt den wesentlichen Vorteil mit sich, daß sich bereits der Ersatz je einer Mitnehmerkugel durch ein Paar von Mitnehmerkugeln erheblich auf den Kraftübertragungsvorgang auswirkt. Da die beiden Mitnehmerkugeln beim Betrieb in entgegengesetztem Drehsinn beansprucht werden, können sie sowohl in den Führungsnuten als auch an ihrem Berührungspunkt ohne wesentliche Schleifwirkung abrollen. Selbst wenn aufgrund der nicht exakt antiparallel verlaufenden Drehrichtungen geringfügige Schleifwirkungen auftreten sollten, können diese in Kauf genommen werden, da die Punktberührung der Mitnehmerkugeln wegen deren ständiger Drehung stets an unterschiedlichen Teilen der Kugeloberflächen stattfindet und daher nicht zu einem einseitigen Abschleifen der Kugeloberflächen führen kann. Ein besonderer Vorteil besteht schließlich auch darin, daß die bei der Kraftübertragung auf die Mitnehmerkugeln parallel zur Achse der Lagerbohrung ausgeübten Kraftkomponenten weitgehend kompensiert und daher nicht auf das Hubteil übertragen werden, wodurch die zur Bewegung des Hubteils und des Drehteils aufzuwendenden Kräfte gering sind.

Weitere vorteilhafte Merkmale der Erfindung ergeben sich aus den Unteransprüchen.

Die Erfindung wird nachfolgend in Verbindung mit der beiliegenden Zeichnung an Ausführungsbeispielen näher erläutert. Es zeigen :

Fig. 1 einen schematischen Längsschnitt durch eine erste Ausführungsform der erfindungsgemäßen Vorrichtung ;

Fig. 2 einen Schnitt längs der Linie II-II der Fig. 1;

Fig. 3 und 4 schematische Längsschnitte durch zwei weitere Ausführungsformen der erfindungsgemäßen Vorrichtung ;

Fig. 5 die Ausführungsform nach Fig. 4 in einer anderen Hubstellung ;

Fig. 6 und 7 Schnitte durch zwei Ausführungsformen zur Lagerung eines Paars von Mitnehmerkugeln der erfindungsgemäßen Vorrichtung ;

Fig. 8 einen Schnitt durch eine dritte Ausführungsform zur Lagerung der Mitnehmerkugeln ;

Fig. 9 eine Seitenansicht einer alternativen Ausführungsform einer Kraftübertragungseinrichtung der erfindungsgemäßen Vorrichtung ;

Fig. 10 einen der Fig. 8 entsprechenden Schnitt in stark vergrößertem Maßstab und mit weiteren Einzelheiten der Kraftübertragungseinrichtung ;

Fig. 11 einen schematischen, teilweisen Axialschnitt durch die erfindungsgemäße Vorrichtung zur Darstellung einer zusätzlichen Führungskugel ; und

Fig. 12 einen Querschnitt durch die Vorrichtung nach Fig. 11 längs deren Linie XII-XII.

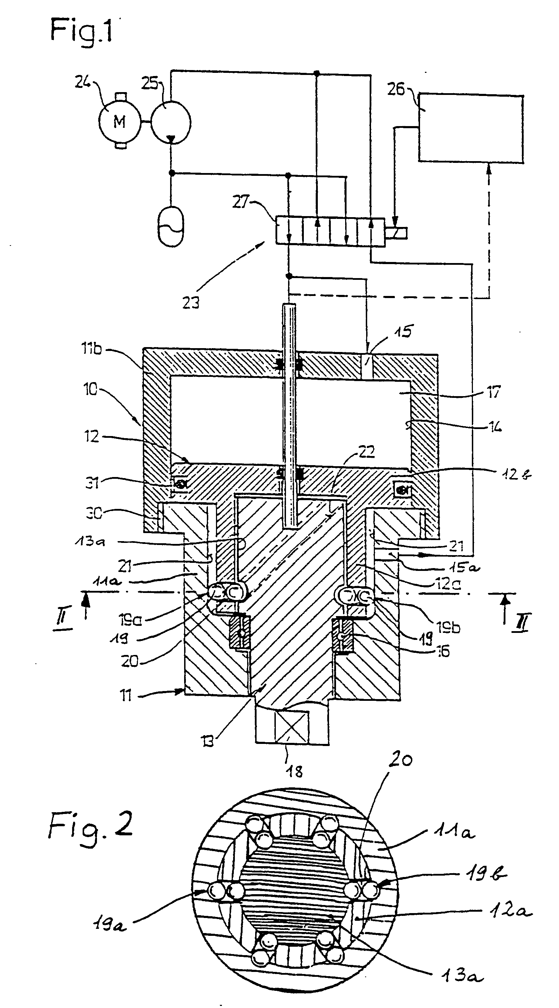

Fig. 1 und 2 zeigen eine Vorrichtung 10 zur Umwandlung einer hin- und hergehenden Drehbewegung in eine hin- und hergehende, lineare Hubbewegung bzw. umgekehrt. Die Vorrichtung 10 enthält einen Lagerkörper 11 mit einem ersten, zylindrischen Wandabschnitt 11a, an dessen Innenmantel wenigstens eine in Richtung der Hubbewegung erstreckte und vorzugsweise achsparallele Führungsnut 21 ausgebildet ist. Die Vorrichtung 10 enthält ferner ein Drehteil 13 mit einem zweiten, außenzylindrischen Wandabschnitt 13a, der zumindest teilweise in den ersten Wandabschnitt 11a ragt, koaxial zu diesem angeordnet ist und an seiner äußeren Umfangsfläche mit wenigstens einer schraubenlinienförmig verlaufenden Führungsnut 22 versehen ist, die unter einem Winkel, vorzugsweise 45°, zur Führungsnut 21 verläuft. Das Drehteil 13 ist mittels eines beliebigen Drehlagers 16 (z.B. Kugellager) drehbar, jedoch axial unverschieblich im Lagerkörper 11 gelagert. Die Vorrichtung 10 enthält ferner ein Hubteil 12 mit einem dritten Wandabschnitt 12a, der vorzugsweise hohlzylindrisch ausgebildet ist, koaxial in den Raum zwischen dem ersten und zweiten Wandabschnitt 11a bzw. 13a ragt und in diesem Raum axial hin- und herbewegt werden kann. In diesem dritten Wandabschnitt 12a ist wenigstens eine ihn vollständig durchsetzende Lagerbohrung 20 ausgebildet, deren Achse quer zur Richtung der Hubbewegung, vorzugsweise senkrecht zu dieser verläuft. Schließlich weist die Vorrichtung 10 eine Kraftübertragungseinrichtung auf, mittels derer die auf das Hubteil 12 ausgeübte Kraft auf das Drehteil 13 übertragen wird, um dieses in eine entsprechende Drehbewegung zu versetzen. An einem freien Ende des Drehteils 13 ist eine Kupplung 18 vorgesehen, die zum Anschluß an einen zu drehenden Gegenstand oder an einen Drehmotor od. dgl. dient.

Erfindungsgemäß besteht die Kraftübertragungseinrichtung aus Paaren 19a, 19b von gegeneinander abgestützten Mitnehmerkugeln 19. Die Kugeln 19 jedes Paars 19a, 19b sind in einer zugeordneten Lagerbohrung 20 hintereinander liegend angeordnet und gegeneinander abgestützt. Jeweils eine der beiden Kugeln 19 ragt in Fig. 1 nach außen aus der zugehörigen Lagerbohrung 20 heraus und in eine zugeordnete der ersten Führungsnuten 21, während die andere der beiden Kugeln 19 in Fig. 1 nach innen aus der Lagerbohrung 20 heraus – und in eine zugeordnete der zweiten Führungsnuten 22 hineinragt. Dabei ist die Anordnung beispielsweise nach Fig. 1 so gewählt, daß die Länge und der Durchmesser jeder Lagerbohrung 20 im wesentlichen gleich dem Durchmesser der Mitnehmerkugeln 19 bemessen sind und jede Kugel 19 mit einer Hälfte aus der Lagerbohrung 20 heraus- und in die zugehörige Führungsnut 21 bzw. 22 hineinragt. Die Führungsnuten 21, 22 sind daher vorzugsweise halbzylindrisch bzw. im Querschnitt halbkreisförmig ausgebildet und mit einem dem Kugelradius entsprechenden Radius versehen. Der Abstand der tiefsten Stellen beider Führungsnuten 21, 22 voneinander entspricht der Summe der beiden Kugeldurchmesser, wobei beide Mitnehmerkugeln 19 vorzugsweise denselben Durchmesser besitzen. Dabei ist selbstverständlich, daß die Kraftübertragungseinrichtung zur Umwandlung einer linearen Hubbewegung des Hubteils 12 in eine Drehbewegung des Drehteils 13 bzw. umgekehrt nur ein einziges Paar 19a oder 19b von Mitnehmerkugeln 19 benötigt. Prinzipiell vorteilhaft ist es jedoch, mehrere solche Paare 19a, 19b vorzusehen, um die auftretenden Kräfte auf mehrere, in gleichmäßigen Abständen längs des Umfangs des Wandabschnitts 12a angeordnete Paare 19a, 19b zu verteilen und gleichzeitig eine reibungsarme Zentrierung des Wandabschnitts 13a im Wandabschnitt 12a bzw. des Wandabschnitts 12a im Wandabschnitt 11a zu erzielen. Dadurch wird auch sichergestellt, daß der Wandabschnitt 12a undrehbar am Wandabschnitt 11a gelagert ist. Da die grundsätzliche Ausbildung und Wirkungsweise der beschriebenen Vorrichtung bekannt ist (US 2 246 733), brauchen hier nur die durch die Erfindung erzielten Unterschiede erläutert werden.

Wird auf das Teil 12 eine Kraft in Richtung der Hubbewegung ausgeübt (beispielsweise in Fig. 1 nach oben), dann rollen die äußeren Mitnehmerkugeln 19 in den Führungsnuten 21 entsprechend den eingezeichneten Pfeilen ab. Dagegen rollen die inneren Mitnehmerkugeln 19 in den schräg verlaufenden Führungsnuten 22 ab. Da die Führungsnuten 22 schräg zu den Führungsnuten 21 angeordnet sind, besitzen die in ihnen abrollenden Mitnehmerkugeln 19 eine beträchtliche Bewegungskomponente in der eingezeichneten Pfeilrichtung, die genau entgegengesetzt zur Drehrichtung der jeweils anderen Mitnehmerkugel 19 des Paars gerichtet ist. Dadurch können die Mitnehmerkugeln 19 dort, wo sie sich in einem mittleren Teil der Lagerbohrung 20 berühren, weitgehend aneinander abrollen. Geringfügige Schleifbewegungen sind zwar möglich. Sie spielen jedoch wegen der Punktberührung der Mitnehmerkugeln 19 nur eine untergeordnete Rolle. Da die Punktberührung beim üblichen Bewegungsspiel der Vorrichtung 10 wegen der hin- und hergehenden Kugelbewegungen ständig auf andere Punkte der Kugeloberfläche überwechselt, sind Dauerbelastungen eines ausgewählten Punktes der Kugeloberflächen nicht zu befürchten. Die Vorrichtung 10 arbeitet daher außerordentlich reibungs- und verschleißarm.

Hinsichtlich der Kraftverteilung ergibt sich der weitere Vorteil, daß von den Mitnehmerkugeln jedes Paars 19a, 19b nur geringe Kräfte auf das Hubteil 12 übertragen werden. Diejenigen Kräfte, die beim üblichen Bewegungsspiel der Vorrichtung 10 die Mitnehmerkugeln 19 aus den Führungsnuten 21, 22 herauszudrücken versuchen, sind weitgehend parallel zu den Achsen der Lagerbohrungen 20 gerichtet und werden durch die gegenseitige Abstützung der Mitnehmerkugeln 19 weitgehend kompensiert. Die auf das Hubteil 12 wirkenden Kräfte bleiben daher weitgehend auf diejenigen kleinen umlaufenden Zonen beschränkt, an denen die Mitnehmerkugeln 12 an der Innenwand der Lagerbohrung 20 anliegen. Da im Bereich dieser Zonen im wesentlichen eine Linienberührung stattfindet, sind die durch sie bewirkten Kräfte bzw. Reibungen ebenfalls sehr klein. Daher brauchen auch nur kleine Kräfte aufgewendet werden, um das Hubteil 12 bzw. das Drehteil 13 hin- und herzubewegen. Dieselben günstigen Verhältnisse ergeben sich natürlich, wenn das Drehteil 13 zwangsweise angetrieben wird, um seine Drehbewegung in eine lineare, hin- und hergehende Bewegung des Hubteils 12 umzuwandeln.

Bei der Vorrichtung 10 nach Fig. 1 weist das Gehäuse 11 einen weiteren Wandabschnitt 11b auf, der koaxial und z.B. mittels einer Schraubverbindung 30 mit dem Wandabschnitt 11a verbunden ist. Dabei dient der Wandabschnitt 11b, dessen Innenmantel 14 an sich beliebig, vorzugsweise jedoch ebenfalls zylindrisch ausgebildet ist, zur Bildung einer abgeschlossenen Kammer 17, die auf der Außenseite eines in der Verlängerung des Wandabschnitts 12a angeordneten und an diesem befestigten, vorzugsweise zylindrischen Kolbens 12b liegt und einen Zylinder bildet, in dem der Kolben 12b mit dem als Kolbenstange wirksamen Wandabschnitt 12a hin- und herbewegt werden kann. Zur Abdichtung des Kolbens 12b gegen den Innenmantel 14 der Kammer 17 dient eine Umfangsdichtung 31.

Eine zweite abgeschlossene Kammer ist durch den Wandabschnitt 11a, den Wandabschnitt 13, die diesen beiden Wandabschnitten zugewandte Seite des Kolbens 12b und ggf. weitere Teile des Lagerkörpers 11 bzw. des Drehteils 13 gebildet, so daß sich insgesamt eine Zylinder/Kolben-Anordnung ergibt.

Zur Erzeugung der Hubbewegung dient beispielsweise eine pneumatische oder hydraulische Einrichtung 23, die einen Antriebsmotor 24, eine von diesem angetriebene Pumpe 25, eine elektrische oder elektronische Steuerung 26 und ein elektrisch umschaltbares Ventil 27 aufweist. Dabei wird die aus Fig. 1 ersichtliche Totpunktlage des Kolbens 12b dadurch erreicht, daß ein Fluid aus der Pumpe 25 durch eine Öffnung 15 in die Kammer 17 eingeführt und gleichzeitig das in der anderen Kammer befindliche Fluid durch eine Öffnung 15a im Wandabschnitt 11a zur Pumpe 25 zurückgeführt wird. Bei der Herstellung der nicht aus Fig. 1 ersichtlichen anderen Totpunktlage erfolgt die Strömung des Fluids in umgekehrter Richtung. Je nach Bewegungsrichtung des Hubteils 12 wird dabei das Drehteil 13 in der einen oder anderen Richtung gedreht, da die Paare 19a, b der Mitnehmerkugeln 19 in den ersten Führungsnuten 21 hin- und herwandern und aufgrund ihres Eingriffs in die zweiten Führungsnuten 22 das Drehteil 13 mitnehmen.

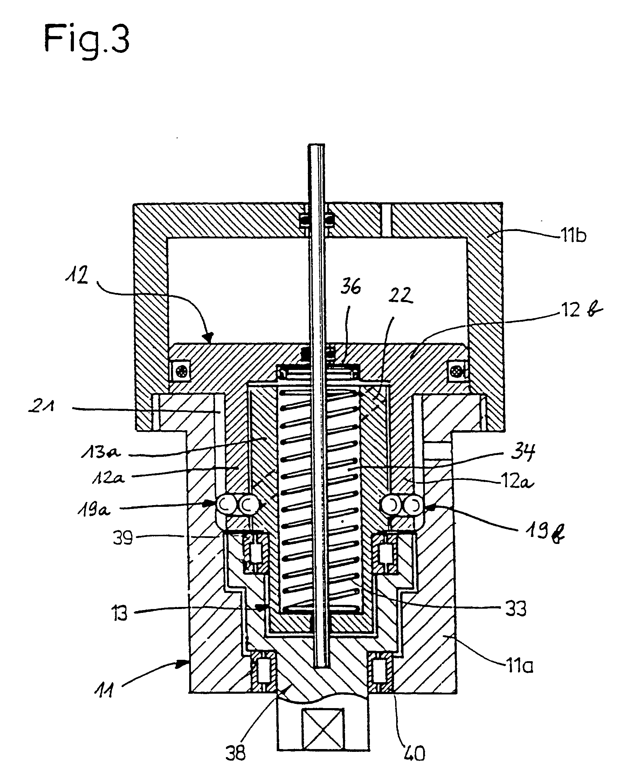

Bei der Ausführungsform nach Fig. 3, in der gleiche Teile mit gleichen Bezugszeichen versehen sind, ist zur Rückführung des Kolbens 12b in die eine Totpunktlage ein Kraftspeicher 32 in Form einer Rückholfeder 33 vorgesehen. Diese ist in einer zum Kolben 12b hin offenen Ausnehmung 34 des Drehteils 13 angeordnet und einerseits am Boden dieser Ausnehmung 34, andererseits an einem am Kolben 12b befestigten Axiallager 36 abgestützt. Nach Herstellung der aus Fig. 3 ersichtlichen Totpunktlage mittels der Einrichtung 23 nach Fig. 1 kann der Kolben 12b unter dem Einfluß der Rückholfeder 33 in die andere Totpunktlage zurückkehren.

Ferner zeichnet sich die Ausführungsform nach Fig. 3 dadurch aus, daß die Hubbewegung in eine nur in einer Richtung erfolgende Drehbewegung umgewandelt wird. Hierzu ist dem Drehteil 13 eine hohlzylindrische Welle 38 aufgesetzt, die wie der Wandabschnitt 12a teilweise in den Raum zwischen dem ersten Wandabschnitt 11a und dem zweiten Wandabschnitt 13a ragt und über Drehlager 39, 40 einerseits drehbar am Drehteil 13 und andererseits drehbar am Lagerkörper 11 gelagert ist. Beide Drehlager 39, 40 sind als Freilauf ausgebildet bzw. mit Rückdrehsperren versehen, so daß die Welle 38 nur intermittierend in einer Richtung gedreht werden kann. Diese Drehung erfolgt z.B. dann, wenn der Kolben 12b in die aus Fig. 3 ersichtliche Totpunktlage bewegt wird. Bei der entgegengesetzten Bewegung des Hubteils 12 kann das Drehteil 13 wieder zurückgedreht werden, während die Rückdrehung der Welle 38 über die Freiläufe blockiert ist. Die Vorrichtung nach Fig. 3 arbeitet daher nach Art eines Schrittmotors bzw. eines intermittierenden Antriebs.

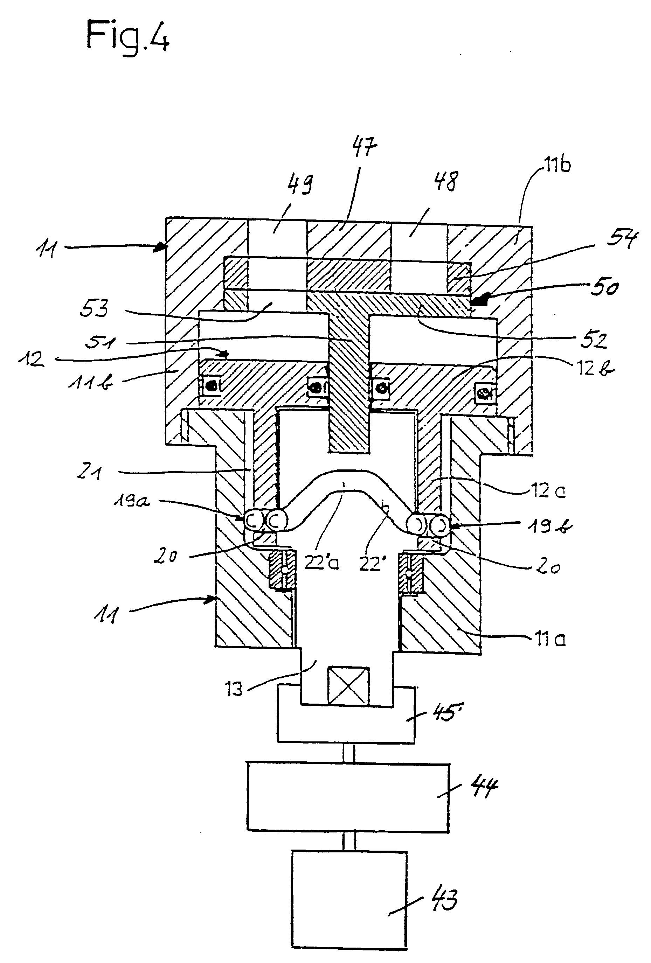

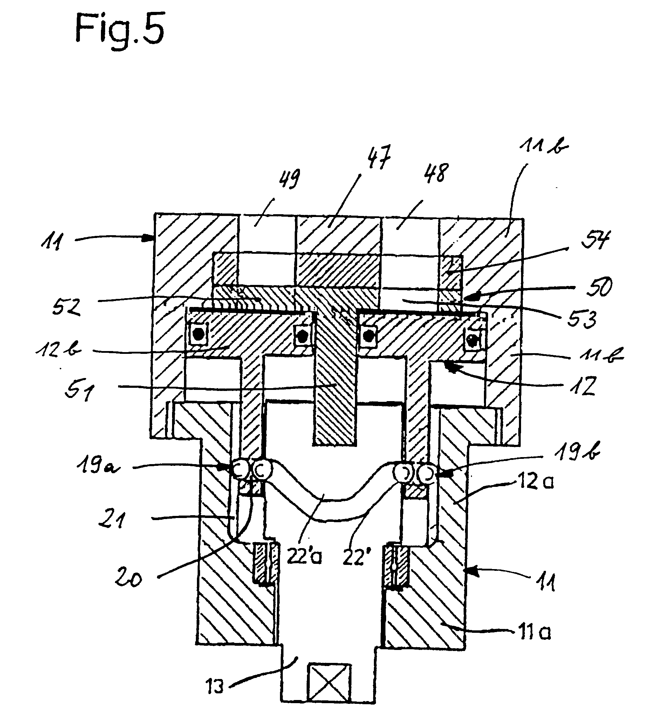

Bei der Ausführungsform nach Fig. 4 und 5, in der für gleiche Teile wiederum gleiche Bezugszeichen verwendet sind, weist das Drehteil 13 eine Führungsnut 22' auf. Wie aus der ungeschnittenen Darstellung des Drehteils 13 ersichtlich ist, enthält die Führungsnut 22' je einen ansteigenden und abfallenden Abschnitt. Vorzugsweise sind auf jeder Hälfte des Umfangs des Drehteils 13 je ein ansteigender und abfallender Abschnitt vorgesehen, wobei alle Abschnitte ineinander übergehen.

Wird das Drehteil 13 daher mittels eines Motors 43, der über ein vorzugsweise regelbares Getriebe 44 und mittels einer Kupplung 45 angekuppelt ist, kontinuierlich in einer Richtung gedreht, dann wird diese Drehbewegung mit Hilfe der Führungsnuten 22', der Paare 19a, b von Mitnehmerkugeln 19 und der Führungsnuten 21 in eine hin- und hergehende Bewegung des Hubteils 12 und des Kolbens 12b umgewandelt. Pro Umdrehung des Drehteils 13 wird der Kolben 12b bei dieser Ausführungsform je zweimal hin- und herbewegt.

In einer zur Oberfläche des Kolbens 12b parallelen Abschlußwand 47 des Lagerkörpers 11 sind wenigstens je eine Einlaßöffnung 48 und eine Auslaßöffnung 49 ausgebildet. Diesen steht eine an der Innenseite der Abschlußwand 47 angeordnete und an dieser dicht anliegende, vorzugsweise aus einem keramischen Material bestehende Steuerscheibe 50 gegenüber, die mittels eines abgedichtet durch den Kolben 12b geführten, zylindrischen Stabs 51 am Drehteil 13 befestigt ist. Die Steuerscheibe 50 weist zwei abdeckende Abschnitte 52 und zwei Durchgangsöffnungen 53 auf, die durch Drehen der Steuerscheibe 50 auf die Öffnungen 48, 49 ausgerichtet werden können. Die Abschnitte 52 und Durchgangsöffnungen 53 sind relativ zu den ansteigenden und abfallenden Abschnitten der Führungsnut 22' so angeordnet, daß beim Bewegen des Kolbens 12b in die aus Fig. 5 ersichtliche Totpunktstellung jeweils die Einlaßöffnung 48 abgedeckt und die Auslaßöffnung 49 auf eine Durchgangsöffnung 53 ausgerichtet ist (Stellung nach Fig. 4). Bei der umgekehrten Bewegung des Hubteils dagegen ist die Auslaßöffnung 49 abgedeckt und die Einlaßöffnung auf eine Durchgangsöffnung 53 ausgerichtet (Stellung nach Fig. 5). Dadurch kann mit einfachsten Mitteln eine Pumpwirkung erzielt werden, indem die Einlaßöffnung 48 an den das zu fördernde Medium enthaltenden Raum und die Auslaßöffnung 49 an den das Medium aufnehmenden Raum angeschlossen wird. Durch entsprechende Bemessung der verschiedenen Abschnitte der Führungsnut 22' lassen sich die Öffnungs- und Verschlußzeiten vorwählen. Außerdem kann die Führungsnut 22' mit horizontalen Abschnitten 22'a (Fig. 4) versehen werden, die dazu dienen, das Hubteil 12 trotz Drehung des Drehteils 13 und der Steuerscheibe 50 im Stillstand zu halten und dadurch das Öffnen bzw. Verschließen der Einlaß- und Auslaßöffnungen 48, 49 vorzubereiten. Zwischen der Steuerscheibe 50 und der Wand 47 wird zweckmäßig noch eine aus keramischem Material od. dgl. bestehende, dasselbe Lochmuster wie die Wand 47 aufweisende Dichtscheibe 54 angeordnet.

Die Arbeitsfolge der Pumpe nach Fig. 4 besteht im Prinzip aus den Takten Ansaugen, Verdichten und Ausstoßen, die auch in kinematisch umgekehrter Weise angewendet werden können, um dadurch das Grundprinzip einer aktiven Brennkraftmaschine, z.B. eines Otto- oder Dieselmotors zu realisieren, wobei anstelle der gezeigten Ventilsteuerung auch eine beliebige andere Ventilsteuerung vorgesehen werden kann. Eine solche Brennkraftmaschine mit Drehschiebersteuerung hätte gegenüber den bekannten Maschinen mit Kurbeltrieben den Vorteil, daß die Kraftübertragung gleichmäßig über den Hub erfolgen kann und nicht eine Funktion der jeweiligen Winkelstellung des Kurbeltriebs ist. Außerdem würde keine direkte Beziehung zwischen dem maximal erzeugbaren Drehmoment und dem Hub des Kolbens bestehen, so daß sich bei gegebener Baugröße höhere Drehmomente erzielen ließen. Daher kann die Vorrichtung nach Fig. 4 bei entsprechender Anpassung das Kurbelwellenprinzip in einer Vielzahl von Anwendungsmöglichkeiten ersetzen. Dabei können auch jeweils mehrere der beschriebenen Vorrichtungen mit ihren Drehteilen 13 auf gemeinsame Zahnräder arbeiten und zu einer Vielzahl von Kolben/Zylinder-Anordnungen auf kleinem Raum zusammengefaßt werden. Derartige Aggregate können als Motoren nach dem Zweitakt- oder Viertaktverfahren angewendet werden.

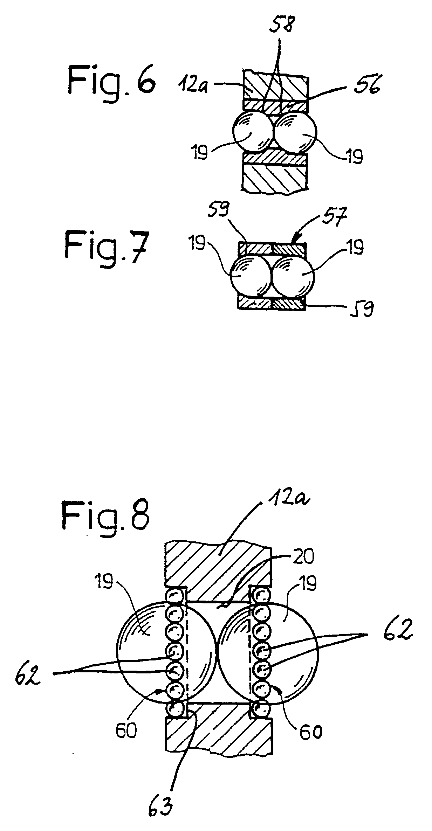

Zur Montage der Mitnehmerkugel 19 und ggf. weiterer Kugeln kann es zweckmäßig sein, diese entsprechend Fig. 6 und 7 in Lagerbuchsen 56, 57 zu lagern, die in die Lagerbohrungen 20 des Wandabschnitts 12a eingepreßt werden und vorzugsweise aus gehärteten Materialien bestehen. Diese Lagerbuchsen 56, 57 können entweder entsprechend Fig. 6 mit umlaufenden, inneren Vorsprüngen 58 oder mit umlaufenden, äußeren Vorsprüngen 59 versehen sein, die nach Art von Lagerschalen als innere bzw. äußere Anlageflächen für die Mitnehmerkugeln 19 dienen. Dabei besteht die Lagerbuchse 57 entsprechend Fig. 7 vorzugsweise aus zwei in axialer Richtung aneinandergrenzenden Hälften, die zusätzlich durch achsparallele Schrauben verbunden sein können.

Bei schnellaufenden Vorrichtungen, z.B. Hydraulikmotoren, kann es zweckmäßig sein, die Schleifwirkung zwischen den Mitnehmerkugeln 19 und den Wandungen der Lagerbohrungen 20 dadurch zu reduzieren, daß zwischen den Mitnehmerkugeln 19 jeweils ein Stützmechanismus angeordnet wird, der ein unmittelbares Anliegen der Mitnehmerkugeln 19 an der Wandung der Lagerbohrung 20 verhindert. Ein derartiger Stützmechanismus besteht z.B. nach Fig. 8 aus zwei Kränzen 60 von Stützkugeln 62, deren Durchmesser kleiner als der Durchmesser der Mitnehmerkugeln 19 ist. Die Stützkugeln 62 sind in ringförmig umlaufenden Aufnahmen 63 gelagert, die an den stirnseitigen Enden der Lagerbohrungen 20 durch Querschnittsverbreiterung ausgebildet sind, und jeweils mit Punktberührung an den Wandungen der Lagerbohrung 20 abgestützt. Die Aufnahmen 63 erleichtern gleichzeitig die Montage der Kränze 60. Die Durchmesser der Aufnahmen 63 und Stützkugeln 62 sind im Verhältnis zu den Durchmessern der Mitnehmerkugeln 19 so groß, daß diese entsprechend Fig. 8 zwar mit Punktberührung auf dem zugeordneten Kranz aus Stützkugeln 62 abgestützt werden, aber dennoch teilweise den Kranz durchragen, um sich in einem mittleren Teil der Lagerbohrung 20 zu berühren.

Die beschriebene Wirkung der Mitnehmerkugeln 19 tritt im Rahmen der vorliegenden Erfindung auch dann ein, wenn die Mitnehmerkugeln 19 nicht unmittelbar, sondern über eine ganzzeilige Anzahl von Übertragungsmechanismen nur mittelbar gegeneinander abgestützt sind. Jeder Übertragungsmechanismus kann im einfachsten Fall aus wenigstens einer Übertragungskugel bestehen, so daß zwischen je zwei Mitnehmerkugeln 19 eine gerade Anzahl von Übertragungskugeln hintereinander liegend in derselben Lagerbohrung 20 angeordnet ist. Da die Anzahl der Übertragungskugeln pro Lagerbohrung 20 geradzahlig ist, drehen sich benachbarte Kugeln an ihrem Berührungspunkt immer gegenläufig, so daß sie ohne wesentliche Schleifwirkung aneinander abrollen. Im Vergleich zu Fig. 1 bis 7 wäre nur die axiale Länge der Lagerbohrungen 20 derart zu verlängern, daß die äußere bzw. innere Mitnehmerkugel 19 in der erwünschten Weise teils in der Lagerbohrung 20 geführt wird und teilweise in der ihr zugeordneten Führungsnut 21 bzw. 22 abrollt.

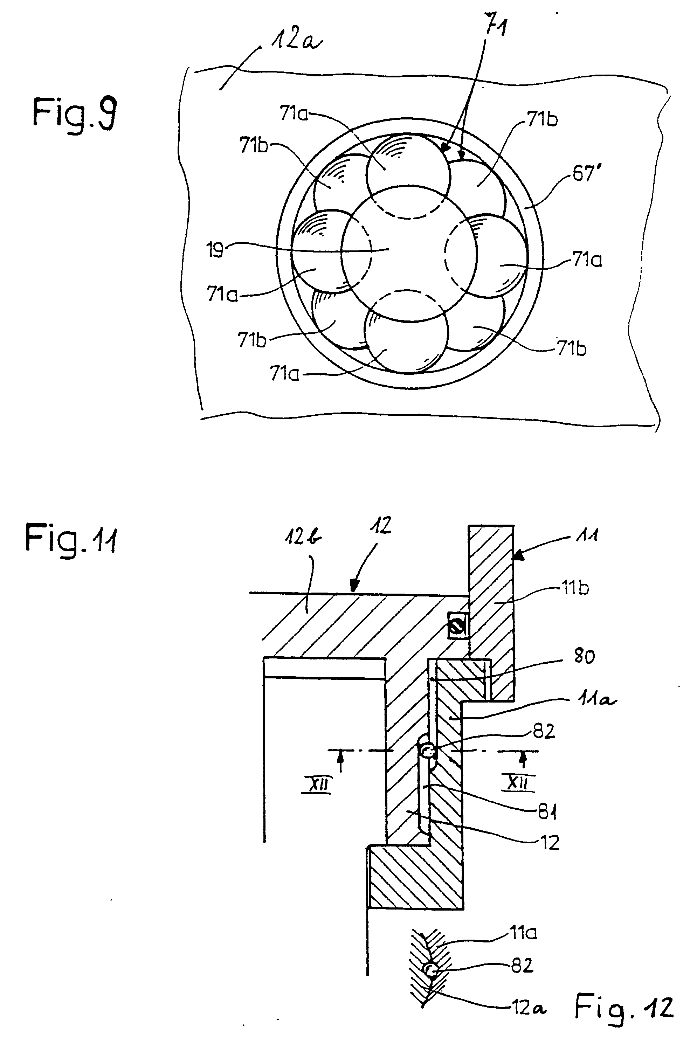

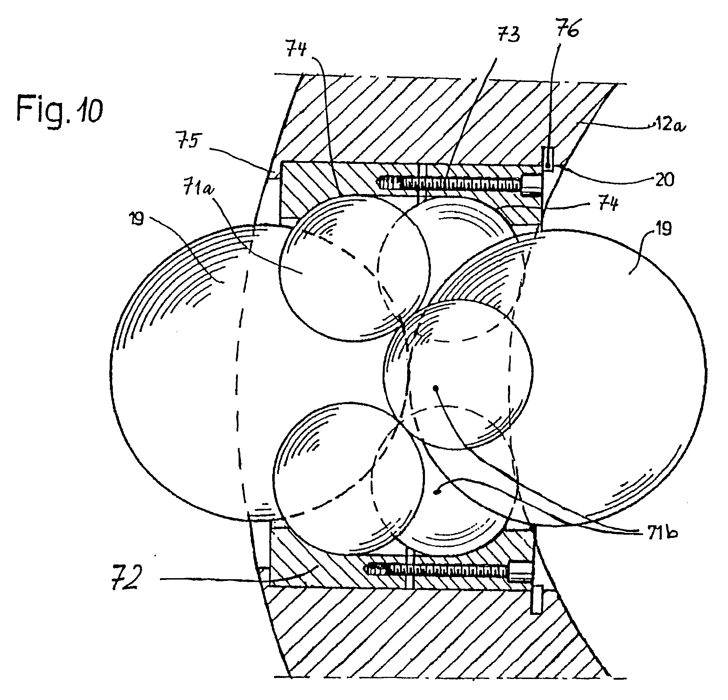

Zur Vermeidung zu hoher Drücke aufgrund der Punktberührung der Mitnehmerkugeln 19 kann nach Fig. 9 und 10 weiter vorgesehen sein, jeden Übertragungsmechanismus aus einem Kranz 71 von Übertragungskugeln 71a bzw. 71b auszubilden, wobei jeder Kranz 71 analog zu Fig. 8 in der Lagerbohrung 20 abgestützt ist. Im Gegensatz zu Fig. 8 stehen jedoch die Übertragungskugeln 71a des einen Kranzes und die Übertragungskugeln 71b des anderen Kranzes in einem mittleren Bereich der Lagerbohrung 20 jeweils in Berührung. Daher brauchen sich die Mitnehmerkugeln 19 bei dieser Ausführungsform nicht selbst unmittelbar berühren bzw. abstützen. Die gewünschte gegenseitige Abstützung erfolgt in diesem Fall mittelbar über die Kränze 71. Da eine gerade Anzahl von Kränzen 71 vorgesehen ist, können alle beteiligten Kugeln 19, 71a, 71b in der erwünschten Weise aneinander bzw. in den Führungsnuten 21, 22 abrollen.

Wie der vergrößerte Schnitt nach Fig. 10 zeigt, erfolgt die Montage der Kränze 71 vorzugsweise mit Hilfe einer zweiteiligen, in die Lagerbohrung 20 eingesetzten Lagerbuchse 72, deren beide Hälften mittels einer Schraube 73 fest verbunden werden und lagerschalenartige Aufnahmen 74 zum Sichern der Übertragungskugeln 71a, b gegen Herausfallen aufweisen. Die Lagerbuchse 72 kann z.B. durch einen Ansatz 75 und einen Sprengring 76 in der Lagerbohrung 20 festgelegt werden. Die Zahl und Größe der Übertragungskugeln 71a, b ist weitgehend frei wählbar. Im Ausführungsbeispiel sind je vier Übertragungskugeln 71a bzw. 71b vorgesehen, deren Durchmesser kleiner als die Durchmesser der Mitnehmerkugeln 19 sind. Die Übertragungskugeln 71a, b sind gemäß Fig. 9 so bemessen, daß jeweils eine Übertragungskugel 71a des einen Kranzes zwischen zwei Übertragungskugeln 71b des anderen Kranzes bzw. umgekehrt abgestützt ist, ohne daß sich die Übertragungskugeln 71a bzw. 71b untereinander berühren. Jede Mitnehmerkugel 19 steht dagegen mit den vier Übertragungskugeln 71a, b des zugeordneten Kranzes 71 in Berührung und übt dabei entsprechend Fig. 9 gleichzeitig eine Spreizwirkung auf die Übertragungskugeln 71a, b aus. Diese werden daher teils radial gegen die Lagerbuchse 72 und teils axial gegen die sie abstützenden Übertragungskugeln des jeweils anderen Kranzes 71 gedrückt. Die jeweilige Kraftverteilung läßt sich dabei durch Wahl der Größe und Anzahl der Übertragungskugeln steuern.

Hinsichtlich der Einstellung des Lagerspiels bei den beschriebenen Ausführungsbeispielen ist lediglich zu beachten, daß der Abstand der Führungsnuten 21 und 22, von ihrem Grund aus gemessen, gleich bzw. geringfügig größer als die Summe der Durchmesser der Mitnehmerkugeln 19 ist. Dieses Maß kann z.B. dadurch einstellbar gemacht werden, daß die Führungsnuten 21 in keilförmigen, parallel zu den Führungsnuten 21 verschiebbaren Gleitstücken ausgebildet werden. Abgesehen davon hat sich jedoch gezeigt, daß ein geringfügiges Spiel zwischen den verschiedenen Kugeln im Leerlauf zugelassen werden kann. Sofern dieses Spiel ausreichend klein ist, rollen die Mitnehmerkugeln 19 bei in Betrieb befindlicher Vorrichtung nicht exakt am jeweiligen Nutengrund, sondern an den Seitenwandungen der Führungsnuten 21, 22 ab, so daß sich auch in diesem Fall zumindest beim Betrieb die gewünschte gegenseitige Abstützung der Mitnehmerkugeln und/oder Stütz- und Übertragungskugeln ergibt.

Zur Verbesserung der Führung des Wandabschnitts 12a im Wandabschnitt 11a ist gemäß Fig. 11 und 12 vorgesehen, in diesen beiden Wandabschnitten zusätzliche, parallel zur Hubbewegung verlaufende Führungsnuten 80, 81 auszubilden und in diesen zusätzliche Führungskugeln 82 anzuordnen. Dadurch wird das Hubteil 12 reibungsarm und drehfest im Lagerkörper 11 zentriert und gegen Verkanten und unkontrolliertes Drehen gesichert.

Die Erfindung ist nicht auf die beschriebenen Ausführungsbeispiele beschränkt, die sich auf vielfache Weise abwandeln lassen. Dies gilt insbesondere für die im Einzelfall gewählten Durchmesser der Mitnehmer-, Stütz- und Übertragungskugeln, wobei sogar unterschiedliche Durchmesser der Mitnehmerkugeln 19 pro Lagerbohrung 20 bei entsprechender Abstufung derselben möglich wären. Weiter ist nicht erforderlich, daß die Mitnehmerkugeln 19 exakt jeweils zur Hälfte in den Lagerbohrungen 20 und in den zugehörigen Führungsnuten 21, 22 angeordnet sind. Hier können in Abhängigkeit vom Einzelfall unterschiedliche Verteilungen gewählt werden, sofern dadurch nicht die gewünschte Kraftübertragung gefährdet wird. Auch die Querschnitts- und Bahnformen der Führungsnuten 21, 22 sind weitgehend beliebig wählbar. Insbesondere bei Ausführungsformen entsprechend Fig. 4 kann mit Hilfe unterschiedlich gestalteter ansteigender bzw. abfallender Abschnitte die Bewegungsgeschwindigkeit des Hubteils 12 beim Hin- bzw. Rückhub gesteuert werden. Ferner können, wenn eine zusätzliche Drehbewegung des Hubteils 12 zugelassen bzw. erwünscht ist, auch die äußeren Führungsnuten 21 schraubenlinienfömig geneigt verlaufen, um dadurch nach Art eines Differentialgetriebes Übersetzungen bzw. Untersetzungen der Drehbewegung mit Bezug auf die Hubbewegung bei vorgegebenem Hub zu ermöglichen. Außerdem ist die Ausbildung der bei Bedarf vorgesehenen Übertragungsmechanismen weitgehend beliebig wählbar.

Die Standzeit der erfindungsgemäßen Vorrichtung ist außerordentlich groß. Mit der bisher als am besten erscheinenden Ausführungsform nach Fig. 1 wurden weit über eine Million Hübe durchgeführt, ohne daß sich merkliche Schleifspuren bzw. Riefen an den Mitnehmerkugeln 21, 22 zeigten, obwohl die drei Teile 11, 12 und 13 sämtlich aus preisgünstigen Kunststoffen gefertigt wurden.

Die Erfindung ist weiter nicht auf die aus Fig. 1 bis 12 ersichtliche relative Lage der Teile 11, 12 und 13 beschränkt. Alternativ wäre es möglich, den Lagerkörper 11 und das Drehteil 13 miteinander zu vertauschen, so daß der erste Wandabschnitt 11a ganz innen, der zweite Wandabschnitt 13a ganz außen und der dritte Wandabschnitt 12a wie in Fig. 1 zwischen beiden zu liegen kommt. In diesem Fall wäre allerdings die Führungsnut 22 auf der Innenseite des Wandabschnitts 13a auszubilden.

Weiterhin ist die Erfindung nicht auf eine bestimmte Anzahl von wechselwirkenden Führungsnuten und Paaren 19a, b beschränkt. Vielmehr können am Umfang der Wandabschnitte 11a, 13a stets so viele Führungsnuten 21, 22 ausgebildet werden, wie dies aus konstruktiven Gründen überhaupt möglich ist. Außerdem können parallel zur Hubbewegung mehrere Paare 19a, b in die vorhandenen und ggf. entsprechend verlängerten Führungsnuten 21 und 22 eingesetzt werden. Daher kann die erforderliche Kraftübertragung stets auf eine Vielzahl von Paaren 19a, b verteilt werden, wenn ein einziges Paar von Mitnehmerkugeln 19 hierfür nicht ausreichen sollte. Dabei wäre es auch möglich, im Wandabschnitt 13a mehrere, unterschiedlich ausgebildete Führungsnuten 22 auszubilden und die Anordnung so zu treffen, daß die Lage des Wandabschnitts 13a relativ zum Wandabschnitt 12a einstellbar ist. In diesem Fall könnten die Paare von Mitnehmerkugeln 19 durch entsprechende Einstellung jeweils einer ausgewählten Führungsnut 22 zugeordnet werden.

Die beschriebenen Vorrichtungen lassen sich im übrigen bei entsprechender Anpassung vielfältig anwenden, insbesondere als Stellantriebe, Pumpen, Kompressoren, Motoren, Getriebeelemente, Schwenkantriebe, Bewegungswandler oder Meßwertaufnehmer für Hub- oder Drehbewegungen.

**Ansprüche**

1. Vorrichtung zur Umwandlung einer Drehbewegung in eine hin- und hergehende Hubbewegung bzw. umgekehrt, enthaltend : einen Lagerkörper (11), der einen ersten, zylindrischen Wandabschnitt (11a) mit in Richtung der Hubbewegung verlaufenden ersten Führungsnuten (21) aufweist, ein am Lagerkörper (11) drehbar gelagertes Drehteil (13), das einen zweiten zylindrischen Wandabschnitt (13a) mit unter einem Winkel zu den ersten Führungsnuten (21) angeordneten zweiten Führungsnuten (22) aufweist, ein Hubteil (12), das am Lagerkörper (11) hin- und herbeweglich gelagert ist und einen zwischen den ersten und zweiten Wandabschnitt ragenden dritten Wandabschnitt (12a) aufweist, in dem durchgehende Lagerbohrungen (20) mit quer zur Hubbewegung angeordneten Achsen ausgebildet sind, und eine Kraftübertragungseinrichtung mit in den Lagerbohrungen (20) geführten und teilweise in den ersten und zweiten Führungsnuten abgestützten Mitnehmerkugeln (19), dadurch gekennzeichnet, daß in jeder Lagerbohrung (20) zwei in Achsrichtung hintereinander liegende und gegeneinander abgestützte Mitnehmerkugeln (19) vorgesehen sind, wobei die eine teilweise in der ersten Führungsnut (21) und die andere teilweise in der zweiten Führungsnut (22) abgestützt ist.

2. Vorrichtung nach Anspruch 1, dadurch gekennzeichnet, daß sich die Mitnehmerkugeln (19) zumindest beim Betrieb in einem mittleren Teil der Lagerbohrung (20) berühren.

3. Vorrichtung nach Anspruch 1, dadurch gekennzeichnet, daß in der Lagerbohrung zwischen den beiden Mitnehmerkugeln (19) eine gerade Anzahl von in Achsrichtung hintereinander liegenden, aus weiteren Kugeln gebildeten und zur gegenseitigen Abstützung der Mitnehmerkugeln (19) bestimmten Übertragungsmechanismus angeordnet ist.

4. Vorrichtung nach Anspruch 3, dadurch gekennzeichnet, daß jeder Übertragungsmechanismus aus einer Übertragungskugel besteht, wobei alle Übertragungskugeln in Achsrichtung hintereinander und zwischen den Mitnehmerkugeln (19) angeordnet sind, und daß die Mitnehmer- und Übertragungskugeln zumindest beim Betrieb der Kraftübertragungseinrichtung in gegenseitiger Berührung sind.

5. Vorrichtung nach Anspruch 3, dadurch gekennzeichnet, daß zwei Übertragungsmechanismen vorgesehen sind, die aus je einem in der Lagerbohrung (20) abgestützen, aus mehreren Übertragungskugeln (71a, b) gebildeten Kranz (71) bestehen, der eine der beiden Mitnehmerkugeln (19) abstützt, und daß die Übertragungskugeln (71a, b) beider Kränze (71) zumindest beim Betrieb in gegenseitiger Berührung sind.

6. Vorrichtung nach einem der Ansprüche 1 bis 5, dadurch gekennzeichnet, daß die Mitnehmerkugeln (19) durch je einen aus Stützkugeln (62) bestehenden Stützmechanismus in der Lagerbohrung (20) abgestützt sind.

7. Vorrichtung nach einem der Ansprüche 1 bis 6, dadurch gekennzeichnet, daß in die Lagerbohrung (20) eine zur Aufnahme der Mitnehmer-, Stütz- und- /oder Übertragungskugeln (19, 62, 71a, b) bestimmte Führungsbuchse (56, 57, 72) eingesetzt ist.

8. Vorrichtung nach einem der Ansprüche 1 bis 7, dadurch gekennzeichnet, daß das Hubteil (12) und der Lagerkörper (11) mit in Richtung der Hubbewegung verlaufenden und zusätzliche Führungskugeln (82) abstützenden weiteren Führungsnuten (80, 81) versehen sind.

9. Vorrichtung nach einem der Ansprüche 1 bis 8, dadurch gekennzeichnet, daß der dritte Wandabschnitt (12a) den zweiten Wandabschnitt (13a) und der erste Wandabschnitt (11a) den dritten Wandabschnitt (12a) umgibt.

10. Vorrichtung nach einem der Ansprüche 1 bis 9, dadurch gekennzeichnet, daß das Hubteil (12) einen in einer abgeschlossenen Kammer (17) des Lagerkörpers (11) abgedichtet geführten Kolben (12b) aufweist und die Kammer (17) mit einer wenigstens eine durchgehende Öffnung (15) aufweisenden Wand versehen ist.

11. Vorrichtung nach Anspruch 10, dadurch gekennzeichnet, daß der erste und der zweite Wandabschnitt (11a, 13a), der Kolben (12b), der Lagerkörper (11) und das Drehteil (13) eine abgeschlossene Kammer begrenzen und der erste Wandabschnitt (11a) mit wenigstens einer Öffnung (15a) versehen ist.

12. Vorrichtung nach Anspruch 11, dadurch gekennzeichnet, daß sie als Pumpe ausgebildet ist, indem die Wand (47) wenigstens je eine Einlaß- und Auslaßöffnung (48, 49) aufweist und das Drehteil (13) mit einer dieser Wand (47) zugeordneten Steuerscheibe (50) gekoppelt ist, die die Einlaß- und Auslaßöffnungen (48, 49) wahlweise abdeckende bzw. frei gebende Abschnitte (52) bzw. Durchgangsöffnungen (53) aufweist.

## Claims

1. A device for converting a rotary motion into a linear reciprocating motion or vice versa, comprising: a bearing member (11) having a first cylindrical wall portion (11a) with primary guide grooves (21) extending in the direction of the reciprocating motion, a rotary portion (13) mounted to rotate on the bearing member (11), said rotary portion having a second cylindrical wall portion (13a) with secondary guide grooves (22) disposed at an angle relative to the primary guide grooves (21), a reciprocating portion (12) mounted to move to and fro on the bearing member (11), and a third wall portion (12a) projecting between the first and second wall portions, and in which there are formed transversing bearing bores (20) with axes disposed transversely to the reciprocating motion, and a power transmission device with drive balls (19) guided in the bearing bores (20) and partially supported in the primary and secondary guide grooves, characterised in that there are provided in each bearing bore (20) two drive balls (19), lying one behind the other in the axial direction and supported against one another, one being partly supported in the primary guide groove (21), and the other partly in the secondary guide groove (22).

2. A device according to Claim 1, characterised in that, at least when the device is in operation, the drive balls (19) are in contact with each other in a central portion of the bearing bore (20).

3. A device according to Claim 1, characterised in that there is located in the bearing bore between the two bearing balls (19) an even number of transmission mechanisms in the form of further balls, lying one behind the other in the axial direction, and intended for mutual support of the drive balls (19).

4. A device according to Claim 3, characterised in that each transmission mechanism consists of a transmission ball, all said transmission balls being disposed one behind the other in the axial direction and between the drive balls (19), and that the drive and transmission balls, at least during operation of the power transmission device, are in mutual contact.

5. A device according to Claim 3, characterised in that two transmission mechanisms are provided, each consisting of a ring (71) formed from several transmission balls (71a, b), which supports one of the two drive balls (19), and that the transmission balls (71a, b) of both rings (71), at least during operation, are in mutual contact.

6. A device according to one of Claims 1 to 5, characterised in that the drive balls (19) are supported by respective support mechanisms, each consisting of support balls (62), in the bearing bore (20).

7. A device according to one of Claims 1 to 6, characterised in that there is inserted into the bearing bore (20) a guide bush (56, 57, 72) intended to receive the drive, support and/or transmission balls (19, 62, 71a, b).

8. A device according to one of Claims 1 to 7, characterised in that the reciprocating portion (12) and the bearing member (11) are provided with further guide grooves (80, 81) extending in the direction of the reciprocating motion, and supporting additional guide balls (82).

9. A device according to one of Claims 1 to 8, characterised in that the third wall portion (12a) surrounds the second wall portion (13a), and the first wall portion (11a) surrounds the third wall portion (12a).

10. A device according to one of Claims 1 to 9, characterised in that the reciprocating portion (12) has a piston (12b) sealed and guided in an enclosed chamber (17) of the bearing member (11), and the chamber (17) is provided with a wall having at least one passage opening (15).

11. A device according to Claim 10, characterised in that the first and second wall portions (11a, 13a), the piston (12b), the bearing member (11) and the rotary portion (13) define an enclosed chamber, and the first wall portion (11a) is provided with at least one opening (15a).

12. A device according to Claim 11, characterised in that it is in the form of a pump, the wall (47) having at least one inlet and one outlet opening (48, 49), and the rotary portion (13) being coupled to a disc cam (50) associated with this wall (47), said disc cam having portions (52) or passage openings (53) selectively covering or releasing the inlet and outlet openings (48, 49).

## Revendications

1. Dispositif pour convertir un mouvement rotatif en mouvement linéaire alternatif et vice versa, comprenant un corps de palier (11) qui présente une première section de paroi cylindrique (11a) avec des premières rainures de guidage (21) s'étendant dans la direction du mouvement linéaire, un élément rotatif (13) monté de manière tournante sur le corps de palier (11) et présentant une seconde section de paroi cylindrique (13a) avec des secondes rainures de guidage (22) inclinées par rapport aux premières rainures de guidage (21), un élément de levage (12) monté sur le corps de palier (11) de façon à pouvoir effectuer des mouvements alternatifs et présentant une troisième section de paroi (12a) qui s'insère entre les première et seconde sections de paroi et dans laquelle sont conformés des alésages de roulement continus (20) dont les axes sont orientés perpendiculairement au mouvement alternatif, et un dispositif de transmission de force avec des billes d'entraînement (19) guidées dans les alésages de roulement (20) et s'appuyant en partie dans les premières et secondes rainures de guidage, **caractérisé en ce** que dans chaque alésage de roulement (20) sont prévues deux billes d'entraînement (19) disposées l'une derrière l'autre dans le sens axial et s'appuyant l'une sur l'autre, l'une des billes prenant appui en partie dans la première rainure de guidage (21) et l'autre prenant appui en partie dans la seconde rainure de guidage (22).

2. Dispositif selon la revendication 1, caractérisé en ce que les billes d'entraînement (19) se touchent, au moins en service, dans une zone médiane de l'alésage de roulement (20).

3. Dispositif selon la revendication 1, caractérisé en ce que dans l'alésage de roulement sont disposés, entre les deux billes d'entraînement (19), un nombre pair de mécanismes de transmission placés les uns derrière les autres dans le sens axial, constitués de billes supplémentaires et destinés à assurer l'appui mutuel des billes d'entraînement (19).

4. Dispositif selon la revendication 3, caractérisé en ce que chaque mécanisme de transmission se compose d'une bille de transmission, toutes les billes de transmission étant disposées axialement les unes derrière les autres et entre les billes d'entraînement (19), et que les billes d'entraînement et de transmission sont en contact les unes avec les autres, au moins pendant le fonctionnement du dispositif de transmission de force.

5. Dispositif selon la revendication 3, caractérisé en ce qu'il comprend deux mécanismes de transmission constitués chacun par une couronne (71) formée par plusieurs billes de transmission (71a, b) et s'appuyant dans l'alésage de roulement (20) et servant d'appui à l'une des deux billes d'entraînement (19), et que les billes de transmission (71a, b) des deux couronnes (71) sont en contact les unes avec les autres, au moins pendant le fonctionnement.

6. Dispositif selon l'une des revendications 1 à 5, caractérisé en ce que les billes d'entraînement (19) sont soutenues dans l'alésage de roulement (20) par respectivement un mécanisme d'appui constitué de billes d'appui (62).

7. Dispositif selon l'une des revendications 1 à 6, caractérisé en ce qu'une douille de guidage (56, 57, 72) destinée à recevoir les billes d'entraînement, d'appui et/ou de transmission (19, 62, 71a, b) est insérée dans l'alésage de roulement (20).

8. Dispositif selon l'une des revendications 1 à 7, caractérisé en ce que l'élément de levage (12) et le corps de palier (11) sont munis de rainures de guidage (80, 81) qui s'étendent dans la direction du mouvement alternatif et soutiennent des billes de guidage supplémentaires (82).

9. Dispositif selon l'une des revendications 1 à 8, caractérisé en ce que la troisième section de paroi (12a) entoure la seconde section de paroi (13a) et que la première section de paroi (11a) entourai la troisième section de paroi (12a).

10. Dispositif selon l'une des revendications 1 à 9, caractérisé en ce que l'élément de levage (12) comprend un piston (12b) guidé de manière étanche dans une chambre fermée (17) du corps de palier (11), et que la chambre (17) est munie d'une paroi présentant au moins une ouverture continue (15).

11. Dispositif selon la revendication 10, caractérisé en ce que les première et seconde sections de paroi (11a, 13a), le piston (12b), le corps de palier (11) et l'élément rotatif (13) délimitent une chambre fermée, et que la première section de paroi (11a) est munie d'au moins une ouverture (15a).

12. Dispositif selon la revendication 11, caractérisé en ce qu'il est conformé en pompe du fait que la paroi (47) comporte respectivement au moins un orifice d'admission et de sortie (48, 49) et que l'élément rotatif (13) est couplé avec un plateau de distribution (50) associé à ladite paroi (47), qui comprend des sections (52) et respectivement des ouvertures de passage (53) qui recouvrent et respectivement libèrent, au choix, les orifices d'admission et de sortie (48, 49).

# Fig.1

# Fig.2

## Fig.3

# Fig.4

# Fig.5

Fig.6

Fig.7

Fig.8

Fig.9

Fig.11

Fig.12

Fig. 10

EP 0 337 418 B1